# FASCICULE DE BREVET EUROPEEN

(11) **EP 2 590 592 B1**
(45) Date de publication et mention de la délivrance du brevet: **23.04.2014**
(21) Numéro de dépôt: 11743084.3
(22) Date de dépôt: 04.07.2011
(51) Int. Cl.: A61C 3/025

(54) **BUSE POUR POLISSEUR**
DÜSE FÜR EINEN POLIERER
NOZZLE FOR A POLISHER

(30) Priorité: 07.07.2010 FR 1055510
(43) Date de publication de la demande: 15.05.2013
(73) Titulaire: Société pour la Conception des Applications des Techniques Electroniques - SATELEC, 33700 Mérignac (FR)
(72) Inventeur: CASABONNE, Thierry, F-33200 Bordeaux (FR); RUELLAN, Vianney, JM, F-33200 Bordeaux (FR); SAXER, Ulrich, CH-8127 Forch (CH)
(74) Mandataire: Desormiere, Pierre-Louis
(86) Numéro de dépôt international: PCT/FR2011/051570
(87) Numéro de publication internationale: WO 2012/004505

(56) Documents cités:
- JP-A- 2002 165 806
- US-A- 5 765 759
- US-A1- 2007 042 316

## Description

### Arrière plan de l'invention

La présente invention concerne le domaine des polisseurs destinés à délivrer à la fois un fluide, tel que de l'eau, et un mélange d'air et de poudre, ces polisseurs étant constitués principalement d'une pièce à main reliée à une turbine d'alimentation en air sous pression permettant d'entraîner une poudre de traitement et à une pompe d'alimentation en fluide, la pièce à main étant en outre munie d'une buse de sortie pour délivrer le fluide et un mélange d'air et de poudre.

L'invention concerne plus particulièrement, mais non exclusivement, les polisseurs utilisés dans le domaine dentaire pour le traitement des poches parodontales par délivrance d'un fluide et/ou d'un mélange air/poudre entre la gencive et la dent au niveau de la ou des poches parodontales.

Les polisseurs actuellement disponibles permettant de délivrer à la fois un fluide comme de l'eau et un mélange d'air et de poudre dentaire sont équipés d'une buse de sortie qui comprend deux conduits distincts, l'un pour délivrer le fluide et l'autre pour délivrer le mélange air/poudre. Une telle buse est notamment décrite dans le document US 2007/042316.

Le document US5765759 divulgue une buse pour polisseur selon le préambule de la revendication 1.

En outre, les poches parodontales peuvent être présentes sur tout le pourtour d'une dent ou être localisées à n'importe quel endroit sur ce pourtour. Les buses actuelles ne permettent pas de délivrer aisément un fluide et un mélange air/poudre sur tout le pourtour de la dent. En effet, dans le cas d'une molaire, par exemple, le praticien est gêné par la joue du patient et doit incliner fortement la pièce à main du polisseur pour traiter certaines parties autour de la molaire. Malgré cela, certaines poches peuvent rester inaccessibles.

### Objet et résumé de l'invention

La présente invention a pour but de proposer une nouvelle conception de buse pour polisseur qui permet de délivrer le fluide avec le mélange air/poudre directement en sortie de buse et de traiter aisément tout le pourtour d'une dent quel que soit son emplacement dans la bouche du patient sans avoir à incliner trop fortement la pièce à main du polisseur.

Ce but est atteint avec une buse pour polisseur comprenant un corps s'étendant entre une partie proximale destinée à être raccordée à une pièce à main et une partie distale, le corps comprenant un premier canal destiné à délivrer une poudre de polissage et un deuxième canal destiné à délivrer un fluide lesdits premier et deuxième canaux débouchant dans une chambre, caractérisée en ce que ladite partie distale comporte ladite chambre disposée au voisinage de l'extrémité libre de ladite partie distale, et en ce que ladite chambre comporte au moins une ouverture latérale s'étendant dans un plan formant un angle avec le plan axial vertical de ladite partie proximale.

Ainsi, la buse selon l'invention délivre directement en sortie un spray composé à la fois d'un fluide et d'un mélange air/poudre, ce spray étant formé dans la chambre de la buse, c'est-à-dire en amont de la sortie proprement dite de la buse. L'efficacité du traitement, par exemple celui d'une poche parodontale, est amélioré par rapport aux polisseurs qui délivrent le fluide et le mélange air/poudre via des sorties distinctes de la buse.

En outre, la ou les ouvertures latérales de la chambre, à savoir la ou les sorties de la buse, s'inscrivent dans un plan formant un angle avec le plan axial vertical de la partie proximale de la buse qui est destinée à être connectée à une pièce à main. Cette angulation de la ou des sorties de la buse permet d'atteindre des dents ou des parties de celles-ci habituellement difficiles à atteindre avec les buses de l'art antérieur. Avec la buse de l'invention, le praticien peut traiter par exemple les molaires sans être gêné par la bouche du patient.

L'angle formé entre la ou les ouvertures latérales et le plan axial vertical de la partie proximale de la buse s'étend entre 45° et 90° et se situe de préférence autour de 70°.

Selon un mode de réalisation de l'invention, la chambre de la buse comprend deux ouvertures latérales opposées s'étendant chacune dans un plan formant un angle avec le plan axial vertical de ladite partie proximale, ce qui permet de délivrer un spray de chaque côté de la buse et de faciliter le traitement autour d'une dent.

Selon une caractéristique particulière de l'invention, le fond de la chambre présente une ouverture débouchant à l'extrémité libre de la partie distale, ladite ouverture étant alignée avec l'orifice de sortie du deuxième canal dans la chambre.

Selon une autre caractéristique particulière de l'invention, le fond de la chambre comporte un déflecteur disposé en regard de l'orifice de sortie du premier canal dans la chambre de manière à diriger la poudre de polissage délivrée par l'orifice du premier canal vers la ou les ouvertures latérales de la chambre. La poudre de polissage ainsi qu'une partie du fluide arrivant dans la chambre sont ainsi envoyés vers la zone à traiter suivant un mouvement tourbillonnant.

Selon encore une autre caractéristique particulière de l'invention, la partie distale présente une forme d'ellipse dont le grand axe forme un angle avec le plan axial vertical de la partie proximale, le plan de chaque ouverture latérale de la chambre étant sensiblement parallèle au grand axe de l'ellipse. Cette forme d'ellipse et son orientation facilitent l'introduction de l'extrémité de la buse entre la gencive et la dent à traiter ainsi que son mouvement autour de la dent tout en limitant les risques de blessures sur les tissus.

La présente invention a également pour objet un polisseur comprenant une pièce à main comportant un premier canal d'alimentation en poudre de polissage et un deuxième canal d'alimentation en fluide, caractérisé en ce qu'il comprend en outre une buse selon l'invention, la partie proximale de la buse étant connectée à la pièce à main, le premier canal d'alimentation en poudre de polissage coopérant avec le premier canal de la buse et le deuxième canal d'alimentation en fluide coopérant avec le deuxième canal de la buse.

Selon une caractéristique particulière du polisseur selon l'invention, ce dernier comprend un réservoir de poudre interchangeable.

Selon une autre caractéristique du polisseur de l'invention, le premier canal d'alimentation en poudre comporte une ouverture de prélèvement de poudre présente dans le réservoir, le réservoir comprenant un piston apte à obturer ladite ouverture de prélèvement afin de stopper la délivrance de poudre par la buse.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective et de détail d'une buse pour polisseur conformément à un mode de réalisation de l'invention,
- la figure 2 est une vue en coupe de l'extrémité de la buse de la figure 1 selon le plan II-II;
- les figures 3 et 4 sont des vues en coupe et en perspective respectivement selon les plans III-III et IV-IV de la buse de la figure 6,
- la figure 5 est une vue en coupe d'un polisseur équipé d'une buse selon l'invention,
- la figure 6 est une autre une vue en perspective et de détail de la buse de la figure 1,
- la figure 7 est une vue partielle en perspective de la buse de la figure 1,
- la figure 8 est une vue de face de l'extrémité de la buse de la figure 7 suivant le repère VIII.

### Description détaillée des modes de réalisation de l'invention

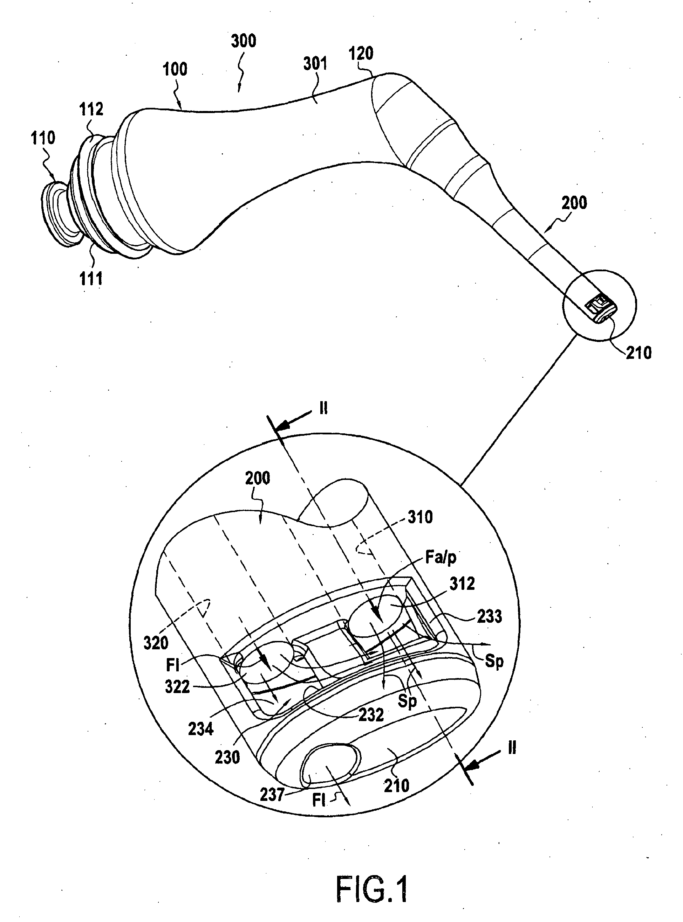

Les figures 1, 3 et 4 représentent une buse 300 destinée à délivrer au moins un spray constitué d'un mélange d'air et de poudre et d'un fluide comme de l'eau par exemple.

La buse 300 est formée d'un corps 301 qui s'étend entre une partie proximale 100 destiné à être couplée mécaniquement avec une pièce à main d'alimentation en mélange air/poudre et fluide comme expliqué plus loin et une partie distale 200 à l'extrémité de laquelle sont délivrés le mélange air/poudre et le fluide.

La partie proximale 100 comporte une extrémité libre 110 comportant un connecteur 111 muni d'un joint 112 afin de permettre une connexion étanche entre la pièce à main et la buse 300. L'extrémité opposée 120 de la partie proximale 100 est prolongée par la partie distale 200 de la buse 300.

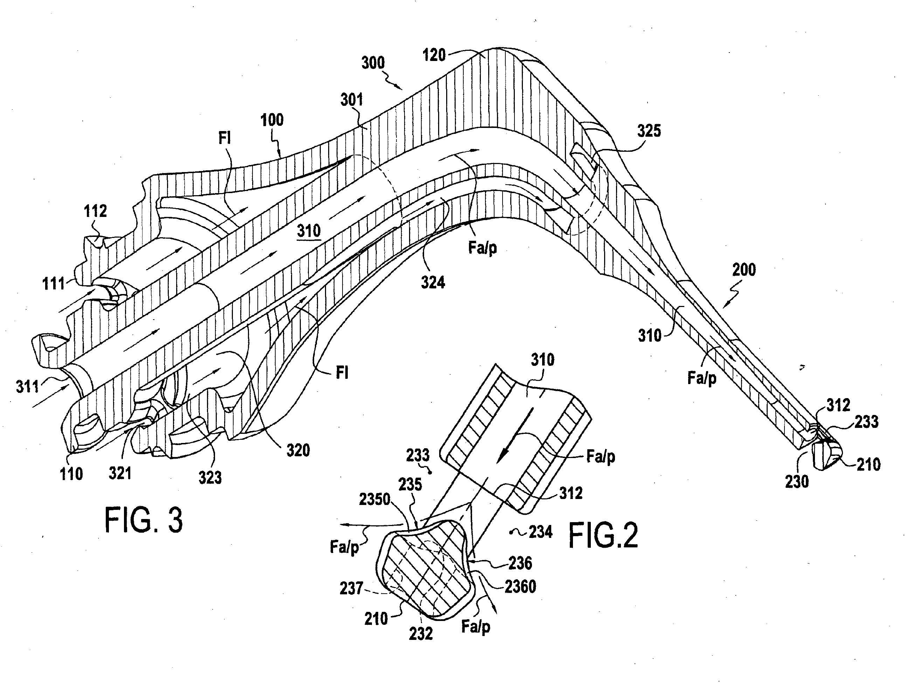

La buse 300 comprend un premier canal interne 310 et un deuxième canal interne 320 qui s'étendent chacun à l'intérieur du corps 301 depuis l'extrémité libre 110 de la partie proximale. Plus précisément, comme illustré sur la figure 3, le premier canal interne 310 est ménagé au centre des parties proximale et distale 100, 200 et débouche en entrée de la buse 300 par un orifice d'entrée 311 et en sortie de buse par un orifice de sortie 312, lui-même débouchant dans une chambre 230 ménagée dans la partie distale 200 au voisinage de son extrémité libre 210.

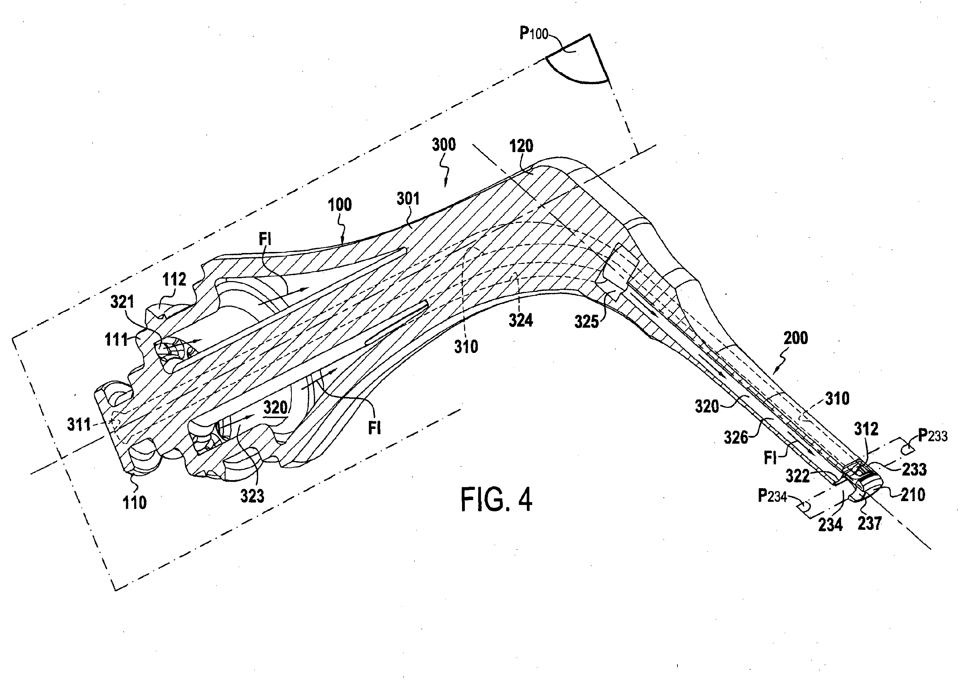

Le deuxième canal interne 320 débouche en entrée de la buse 300 par un orifice d'entrée 321 et en sortie de buse par un orifice de sortie 322, lui-même débouchant dans la chambre 230 (figures 3 et 4). Le deuxième canal interne 320 présente une première portion annulaire 323 formant, à partir de l'extrémité libre 110 de la partie proximale 100, un conduit qui s'étend autour d'une première portion 311 du premier conduit interne 310 dans la partie proximale 100. Dans l'exemple décrit ici, la première portion annulaire 323 présente tout d'abord une forme cylindrique puis une forme tronconique. La fin de cette première portion (extrémité de la partie de forme tronconique) coopère avec une deuxième portion 324 du canal interne 320 qui s'étend le long et en parallèle du premier conduit interne 310 (figure 3). Cette deuxième portion 324 débouche dans une troisième portion de jonction 325 qui entoure au moins partiellement le premier conduit interne 310 (figures 3 et 4). Cette troisième portion relie la deuxième portion 324 à la quatrième portion 326 du deuxième conduit interne qui s'étend parallèlement à une deuxième portion 312 du premier conduit 310 située dans la partie distale 200 de la buse 300 et jusqu'à l'orifice de sortie 322 du deuxième canal interne 320 (figure 4).

Les première et deuxième portions 323, 324 du deuxième conduit interne 320 sont principalement situées dans la partie proximale 100 de la buse 300 tandis que les troisième et quatrième portions 325 et 326 sont situées dans la partie distale 200 de la buse 300.

Comme représentée sur les figures 1 à 4, l'extrémité libre 210 de la partie distale comporte la chambre 230 dans laquelle débouchent les premier et deuxième canaux internes 310 et 320 respectivement par les orifices de sortie 312 et 322.

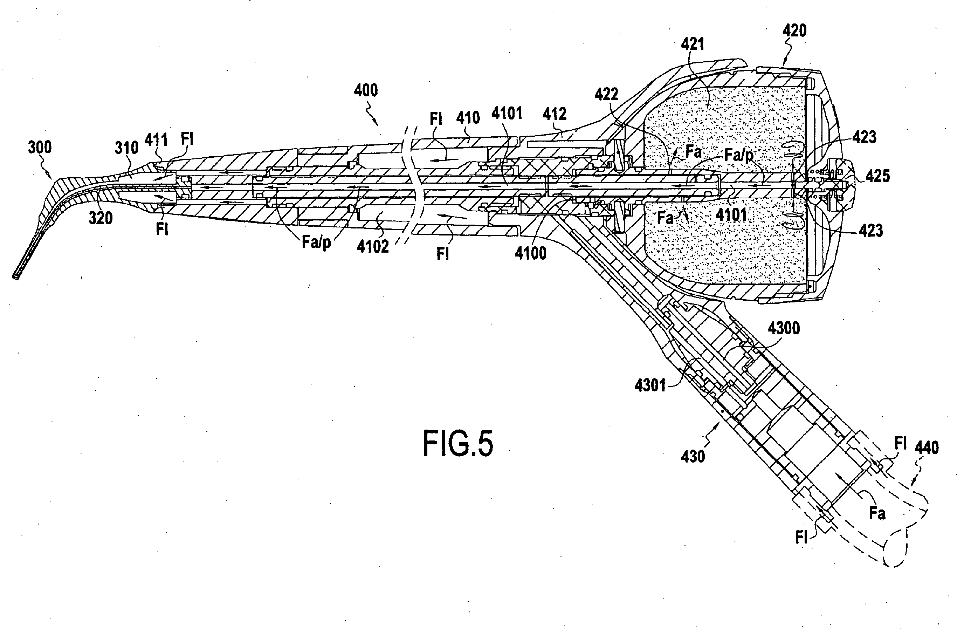

Sur la figure 5, la buse 300 est montée sur une pièce à main 400. La pièce à main 400 comprend un corps 410 dont l'extrémité avant 411 est connectée avec la buse 300 et dont l'extrémité arrière 412 est connectée avec un réservoir interchangeable 420 contenant une poudre dentaire 421. La pièce à main 400 comprend en outre une partie de raccordement 430 destinée à être raccordée à un connecteur 440 lui-même relié à un compresseur (non représenté) destiné à envoyer un flux d'air Fa sous pression dans la pièce à main et à une pompe (non représentée) destinée à envoyer un fluide liquide Fₗ, tel que de l'eau, dans la pièce à main.

Le flux d'air Fa transmis par le connecteur 440 entre dans la pièce à main 400 par un conduit 4300 ménagé dans la partie de raccordement 430 puis est dirigé vers une entrée 422 du réservoir 420 par un conduit 4100 ménagé dans le corps 410 de la pièce à main. Une fois entré dans le réservoir 420, le fluide Fa met la poudre 421 contenue dans le réservoir en suspension et entraîne une fraction de celle-ci vers une ouverture de prélèvement 423 d'un conduit 4101 qui est présent dans le réservoir 420 et qui s'étend dans le corps 410 de la pièce à main 400 jusqu'à son extrémité avant 411. Un mélange air/poudre F_{a/p} est ainsi entraîné dans le conduit 4101. L'alimentation en poudre du conduit 4101 peut être stoppée par l'actionnement d'un piston 425 qui permet d'obturer l'ouverture de prélèvement 423.

Le fluide liquide Fₗ transmis par le connecteur 440 entre dans la pièce à main 400 par un conduit 4301 ménagé dans la partie de raccordement 430 puis est dirigé vers l'extrémité avant 411 du corps 410 de la pièce à main par un conduit 4102 ménagé dans le corps de la pièce à main.

Le conduit 4102 coopère au niveau de l'extrémité avant 411 de la pièce à main 400 avec le premier canal interne 310 de la buse 300 qui est destiné à délivrer au niveau de la chambre 230 le fluide liquide Fₗ. En outre, le conduit 4101 coopère au niveau de l'extrémité avant 411 de la pièce à main avec le deuxième canal interne 320 de la buse qui est destiné à délivrer dans la chambre un mélange air/poudre F_{a/p}.

Conformément à la présente invention, la buse 300 comprend une chambre 230 disposée au voisinage de l'extrémité libre 210 de la partie distale 200 (vue de détail de la figure 1). La chambre 230 est formée par un volume interne ou évidement ménagé à proximité de l'extrémité libre 210 de la partie distale 200 de la buse et qui s'étend entre les orifices de sortie 312 et 322 respectivement des canaux internes 310 et 320 et un fond de chambre 232. La chambre 230 comprend en outre deux ouvertures latérales 233 et 234 ménagées sur la paroi de la partie distale 200 qui permettent l'éjection à l'extérieur de la buse d'un spray Sp constitué par la réunion dans la chambre d'une partie du fluide liquide Fₗ et du mélange air/poudre F_{a/p}. Les ouvertures latérales 233 et 234 sont respectivement disposées sur des côtés opposés de la partie distale. La buse selon la présente invention peut également ne comporter qu'une des deux ouvertures latérales 233 ou 234.

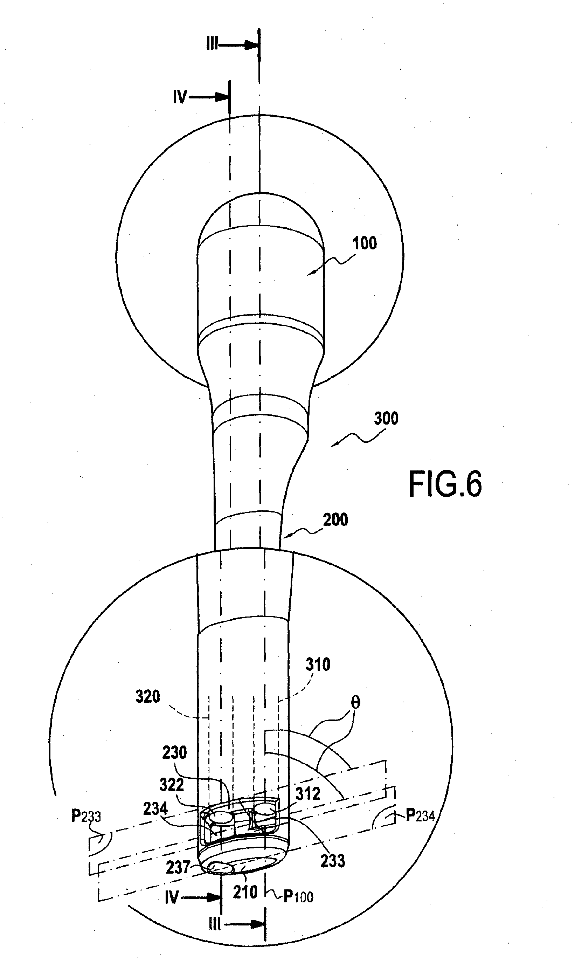

Conformément à l'invention et comme représentées sur les figures 6 à 8 notamment, les ouvertures latérales 233 et 234 s'étendent suivant des plans parallèles P₂₃₃ et P₂₃₄ qui forment un angle θ avec le plan axial vertical P₁₀₀ de la partie proximale 100. Puisque la partie proximale 100 est alignée axialement avec le corps 410 de la pièce à main 400, le plan vertical P₁₀₀ correspond également au plan axial vertical de la pièce à main 400 et à l'orientation suivant laquelle la pièce à main est maintenue par le praticien lors de son utilisation (orientation de la pièce à main illustrée sur la figure 5).

Comme illustré sur la figure 6, l'angle θ formé par les plans P₂₃₃ et P₂₃₄ des ouvertures latérales 233 et 234 avec le plan axial vertical P₁₀₀ de la partie proximale 100 compris entre 45° et 90°, l'angle θ étant de préférence d'environ 70°.

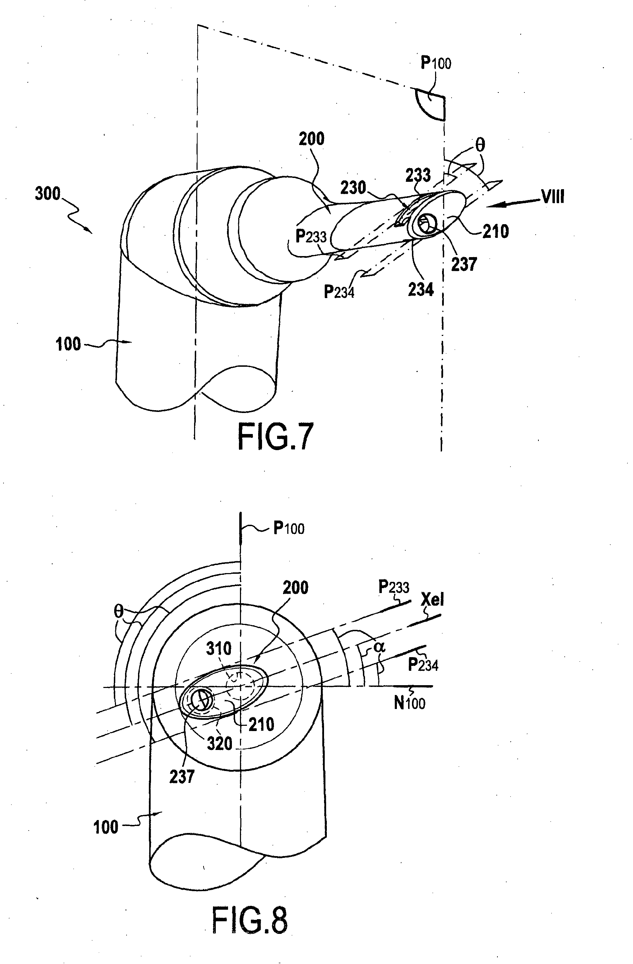

Comme illustré sur la figure 7, l'angulation des ouvertures latérales 233 et 234 peut être également définie par rapport à la normale N₁₀₀ du plan axial vertical P₁₀₀ de la partie proximale 100. Dans ce cas, les plans P₂₃₃ et P₂₃₄ des ouvertures latérales 233 et 234 forment un angle α avec la normale N₁₀₀ compris entre 0° et 45°, l'angle α étant de préférence d'environ 20°.

Cette angulation des ouvertures latérales par rapport au plan axial vertical de la partie proximale permet de faciliter le traitement au niveau des molaires sans être gêné par la joue du patient. En effet, avec les buses de l'art antérieur (angle θ de 180°), certaines poches ne peuvent pas être traitées.

Selon un aspect particulier de l'invention illustré notamment sur la figure 2, le fond 233 de la chambre 230 comporte deux déflecteurs 235 et 236 disposés en regard de l'orifice de sortie 312 du premier canal interne 310. Le déflecteur 235 présente une pente 2350 inclinée vers l'ouverture latérale 233 tandis que le déflecteur 236 présente une pente inclinée vers l'ouverture latérale 234. Les déflecteurs 235 et 236 permettent ainsi de diriger le mélange air/poudre F_{a/p} délivré par l'orifice de sortie 312 du conduit interne 310 respectivement vers les ouvertures latérales 233 et 234. Dans le cas d'une buse ne comportant qu'une seule ouverture latérale, la chambre ne comporte qu'un seul déflecteur pour diriger le mélange air/poudre F_{a/p} vers la seule ouverture latérale. Dans ce cas, le sommet du déflecteur est de préférence décalé vers le côté de l'orifice de sortie du canal interne qui est opposé à l'ouverture latérale afin de dévier l'ensemble du mélange air/poudre F_{a/p} vers l'unique ouverture latérale.

Selon un autre aspect particulier de l'invention, le fond 232 de la chambre 230 présente une ouverture 237 débouchant à l'extrémité libre 210 de la partie distale 200 (figures 1, 6 et 7). L'ouverture 237 est alignée avec l'orifice de sortie 322 du deuxième canal interne 320 de manière à permettre la délivrance directe d'une fraction du fluide liquide Fₗ au niveau de l'extrémité 210 de la partie distale 200 de la buse 300. La présence de l'ouverture 237 permet, en conjonction avec l'actionnement du piston 425 pour stopper la délivrance poudre 421, d'obtenir un léger effet seringue.

Selon encore un autre aspect de l'invention, la partie distale 200 peut présenter, comme dans l'exemple décrit ici, une forme d'ellipse dont le grand axe Xₑₗ est aligné avec les plans P₂₃₃ et P₂₃₄ des ouvertures latérales formant ainsi, par conséquent, également l'angle θ avec le plan axial vertical P₁₀₀ de la partie proximale 100 et l'angle α avec la normale N₁₀₀ du plan axial vertical P₁₀₀. La forme d'ellipse de la partie distale 200 ainsi que son angulation similaire à celle des ouvertures latérales permet de faciliter à la fois l'introduction de l'extrémité de la buse entre la gencive et la dent du patient et le traitement du pourtour de cette dernière. D'autres formes pour la partie distale peuvent être également envisagées telle qu'une forme cylindrique par exemple.

## Revendications

1. Buse (300) pour polisseur comprenant un corps (301) s'étendant entre une partie proximale (100) destinée à être raccordée à une pièce à main (400) et une partie distale (200), ledit corps comprenant un premier canal (310) destiné à délivrer une poudre de polissage et un deuxième canal (320) destiné à délivrer un fluide, lesdits premier et deuxième canaux (320, 310) débouchant dans une chambre (230)
**caractérisée en ce que** ladite partie distale (200) comporte ladite chambre (230) disposée au voisinage de l'extrémité libre (210) de ladite partie distale (200), et **en ce que** ladite chambre comporte au moins une ouverture latérale (233; 234) s'étendant dans un plan (P₂₃₃; P₂₃₄) formant un angle (θ) avec le plan axial vertical (P₁₀₀) de ladite partie proximale (100).

2. Buse selon la revendication 1, **caractérisée en ce qu'**elle comprend deux ouvertures latérales opposées (233, 234) s'étendant chacune dans un plan (P₂₃₃; P₂₃₄) formant un angle (θ) avec le plan axial vertical (P₁₀₀) de ladite partie proximale (100).

3. Buse selon la revendication 1 ou 2, **caractérisée en ce que** l'angle (θ) formé entre le plan (P₂₃₃; P₂₃₄) de chaque ouverture latérale (233; 234) et le plan axial vertical (P₁₀₀) de la partie proximale (100) est compris entre 45° et 90°.

4. Buse selon la revendication 3, **caractérisée en ce que** l'angle (θ) formé entre le plan (P₂₃₃; P₂₃₄) de chaque ouverture latérale (233; 234) et le plan axial vertical (P₁₀₀) de la partie proximale (100) est d'environ 70°.

5. Buse selon l'une quelconque des revendications 1 à 4, **caractérisée en ce que** le fond (232) de la chambre (230) présente une ouverture (237) débouchant à l'extrémité libre (210) de la partie distale (200), ladite ouverture étant alignée avec l'orifice de sortie (322) du deuxième canal (320) dans la chambre (230).

6. Buse selon l'une quelconque des revendications 1 à 5, **caractérisé en ce que** le fond de la chambre comporte au moins un déflecteur (235; 236) disposé en regard de l'orifice de sortie (312) du premier canal (310) dans la chambre (230) de manière à diriger la poudre de polissage délivrée par l'orifice du premier canal vers la ou les ouvertures latérales (233; 234) de la chambre (230).

7. Buse selon l'une quelconque des revendications 1 à 6, **caractérisé en ce que** la partie distale (200) présente une forme d'ellipse dont le grand axe (Xₑₗ) forme un angle (θ) avec le plan axial vertical (P₁₀₀) de ladite partie proximale (100), le plan (P₂₃₃; P₂₃₄) de chaque ouverture latérale (233; 234) de la chambre (230) étant sensiblement parallèle au grand axe de l'ellipse.

8. Polisseur comprenant une pièce à main (400) comportant un premier canal d'alimentation en poudre de polissage (4101) et un deuxième canal d'alimentation en fluide (4102), **caractérisé en ce qu'**il comprend en outre une buse (300) selon l'une quelconque des revendications 1 à 6, la partie proximale (100) de ladite buse étant connectée à la pièce à main (400), ledit premier canal d'alimentation en poudre de polissage (4101) coopérant avec le premier canal (310) de la buse (300) et ledit deuxième canal d'alimentation en fluide (4102) coopérant avec le deuxième canal (320) de la buse.

9. Polisseur selon la revendication 8, **caractérisé en ce qu'**il comprend un réservoir interchangeable (420) contenant une poudre de polissage (421).

10. Polisseur selon la revendication 8, **caractérisé en ce que** le premier canal d'alimentation en poudre (4101) comporte une ouverture de prélèvement de poudre (423) dans le réservoir (420) et ce que ledit réservoir comprend un piston (425) apte à obturer ladite ouverture de prélèvement (423).

## Patentansprüche

1. Düse (300) für einen Polierer, umfassend ein Gehäuse (301), das sich zwischen einem proximalen Teil (100), welcher dazu bestimmt ist, an ein Handstück (400) angeschlossen zu werden, und einem distalen Teil (200) erstreckt, wobei das Gehäuse einen ersten Kanal (310), der dazu bestimmt ist, ein Polierpulver zu liefern, und einen zweiten Kanal (320), der dazu bestimmt ist, ein Fluid zu liefern, umfasst, wobei der erste und der zweite Kanal (320, 310) in eine Kammer (230) münden,
**dadurch gekennzeichnet, dass** der distale Teil (200) die Kammer (230) umfasst, die in der Nähe des freien Endes (210) des distalen Teils (200) angeordnet ist, und dass die Kammer wenigstens eine Seitenöffnung (233; 234) umfasst, die in einer Ebene (P₂₃₃; P₂₃₄), welche mit der vertikalen Axialebene (P₁₀₀) des proximalen Teils (100) einen Winkel (θ) bildet, verläuft.

2. Düse nach Anspruch 1, **dadurch gekennzeichnet, dass** sie zwei gegenüberliegende Seitenöffnungen (233, 234) umfasst, die jeweils in einer Ebene (P₂₃₃; P₂₃₄), welche mit der vertikalen Axialebene (P₁₀₀) des proximalen Teils (100) einen Winkel (θ) bildet, verlaufen.

3. Düse nach Anspruch 1 oder 2, **dadurch gekennzeichnet, dass** der zwischen der Ebene (P₂₃₃; P₂₃₄) einer jeden Seitenöffnung (233; 234) und der vertikalen Axialebene (P₁₀₀) des proximalen Teils (100) gebildete Winkel (θ) zwischen 45° und 90° beträgt.

4. Düse nach Anspruch 3, **dadurch gekennzeichnet, dass** der zwischen der Ebene (P₂₃₃; P₂₃₄) einer jeden Seitenöffnung (233; 234) und der vertikalen Axialebene (P₁₀₀) des proximalen Teils (100) gebildete Winkel (θ) etwa 70° beträgt.

5. Düse nach einem der Ansprüche 1 bis 4, **dadurch gekennzeichnet, dass** der Boden (232) der Kammer (230) eine an dem freien Ende (210) des distalen Teils (200) ausmündende Öffnung (237) umfasst, wobei die Öffnung mit der Austrittsöffnung (322) des zweiten Kanals (320) in der Kammer (230) fluchtet.

6. Düse nach einem der Ansprüche 1 bis 5, **dadurch gekennzeichnet, dass** der Boden der Kammer wenigstens einen Ablenker (235; 236) umfasst, der gegenüber der Austrittsöffnung (312) des ersten Kanals (310) in der Kammer (230) derart angeordnet ist, dass das über die Öffnung des ersten Kanals gelieferte Polierpulver in Richtung der Seitenöffnung oder Seitenöffnungen (233; 234) der Kammer (230) geleitet wird.

7. Düse nach einem der Ansprüche 1 bis 6, **dadurch gekennzeichnet, dass** der distale Teile (200) eine Ellipsenform aufweist, deren Hauptachse (Xₑₗ) mit der vertikalen Axialebene (P₁₀₀) des proximalen Teils (100) einen Winkel (θ) bildet, wobei die Ebene (P₂₃₃; P₂₃₄) einer jeden Seitenöffnung (233; 234) der Kammer (230) zu der Hauptachse der Ellipse im Wesentlichen parallel verläuft.

8. Polierer, umfassend ein Handstück (400) mit einem ersten Kanal zur Versorgung mit Polierpulver (4101) und einem zweiten Kanal zur Versorgung mit Fluid (4102), **dadurch gekennzeichnet, dass** er ferner eine Düse (300) nach einem der Ansprüche 1 bis 6 umfasst, wobei der proximale Teil (100) der Düse an das Handstück (400) angeschlossen ist, wobei der erste Kanal zur Polierpulverversorgung (4101) mit dem ersten Kanal (310) der Düse (300) zusammenwirkt und der zweite Kanal zur Fluidversorgung (4102) mit dem zweiten Kanal (320) der Düse zusammenwirkt.

9. Polierer nach Anspruch 8, **dadurch gekennzeichnet, dass** er einen auswechselbaren Behälter (420), der ein Polierpulver (421) enthält, umfasst.

10. Polierer nach Anspruch 8, **dadurch gekennzeichnet, dass** der erste Kanal zur Pulverversorgung (4101) eine Öffnung zur Pulverentnahme (423) aus dem Behälter (420) umfasst und dass der Behälter einen Kolben (425) umfasst, welcher geeignet ist, die Entnahmeöffnung (423) zu verschließen.

## Claims

1. A polisher nozzle (300) comprising a body (301) extending between a proximal portion (100) for connection to a handpiece (400) and a distal portion (200), said body having a first channel (310) for delivering a polishing powder and a second channel (320) for delivering a fluid, said first and second channels (320, 310) opening out into a chamber (230), the nozzle being **characterized in that** said distal portion (200) includes a chamber (230) disposed in the vicinity of the free end (210) of said distal portion (200), and **in that** said chamber includes at least one lateral opening (233; 234) extending in a plane (P₂₃₃; P₂₃₄) forming an angle (θ) with the vertical axial plane (P₁₀₀) of said proximal portion (100).

2. A nozzle according to claim 1, **characterized in that** it includes two opposite lateral openings (233, 234) each extending in a respective plane (P₂₃₃; P₂₃₄) forming an angle (θ) with the vertical axial plane (P₁₀₀) of said proximal portion (100).

3. A nozzle according to claim 1 or claim 2, **characterized in that** the angle (θ) formed between the plane (P₂₃₃; P₂₃₄) of each lateral opening (233; 234) and the vertical axial plane (P₁₀₀) of the proximal portion (100) lies in the range 45° to 90°.

4. A nozzle according to claim 3, **characterized in that** the angle (θ) formed between the plane (P₂₃₃; P₂₃₄) of each lateral opening (233; 234) and the vertical axial plane (P₁₀₀) of the proximal portion (100) is about 70°.

5. A nozzle according to any one of claims 1 to 4, **characterized in that** the end wall (232) of the chamber (230) presents an opening (237) opening out to the free end (210) of the distal portion (200), said opening being in alignment with the outlet orifice (322) of the second channel (320) in the chamber (230).

6. A nozzle according to any one of claims 1 to 5, **characterized in that** the end wall of the chamber includes at least one deflector (235; 236) placed facing the outlet orifice (312) of the first channel (310) in the chamber (230) in such a manner as to direct the polishing powder delivered by the orifice of the first channel towards the or each lateral opening (233; 234) of the chamber (230).

7. A nozzle according to any one of claims 1 to 6, **characterized in that** the distal portion (200) presents an elliptical shape with its major axis (Xₑₗ) forming an angle (θ) relative to the vertical axial plane (P₁₀₀) of said proximal portion (100), the plane (P₂₃₃; P₂₃₄) of each lateral opening (233; 234) of the chamber (230) being substantially parallel to the major axis of the ellipse.

8. A polisher comprising a handpiece (400) including a first channel (4101) for feeding polishing powder and a second channel (4102) for feeding fluid, the polisher being **characterized in that** it further includes a nozzle (300) according to any one of claims 1 to 6, the proximal portion (100) of said nozzle being connected to the handpiece (400), said first channel (4101) for feeding polishing powder co-operating with the first channel (310) in the nozzle (300), and said second channel (4102) for feeding fluid co-operating with the second channel (320) in the nozzle.

9. A polisher according to claim 8, **characterized in that** it includes an interchangeable tank (420) containing a polishing powder (421).

10. A polisher according to claim 8, **characterized in that** the first channel (4101) for feeding powder includes a powder-taking opening (423) in the tank (420) and said tank includes a piston (425) suitable for closing said powder-taking opening (423).
